# EUROPEAN PATENT APPLICATION

(11) **EP 4 616 988 A1**
(43) Date of publication of application: **17.09.2025**
(21) Application number: 23888284.9
(22) Date of filing: 19.07.2023
(51) Int. Cl.: B23K 20/12, F16D 65/02, F16D 55/228

(54) **DISC BRAKE AND CALIPER BODY**

(30) Priority: 07.11.2022 JP 2022178252
(71) Applicant: Astemo, Ltd., Chiyoda-ku, Tokyo 1000004 (JP)
(72) Inventor: IWAHASHI Yoshiki, Hitachinaka-shi, Ibaraki 312-8503 (JP)
(74) Representative: Hoefer & Partner Patentanwälte mbB
(86) International application number: PCT/JP2023/026451
(87) International publication number: WO 2024/100929

(57) **Abstract**

Provided are a disc brake and a caliper body that prevent the caliper body from increasing in size toward a disc leading edge and a disc trailing edge by bulging portions provided at completion positions of friction stir welding. Two cylinders 4 are provided to an action unit 3a of a caliper body 3 disposed on one side portion of a disc rotor 2. The cylinders 4 each include a cylinder bore 4a formed therethrough in a disc axial direction, and a lid member 4b that closes an opening of the cylinder bore 4a on a side opposite to the disc rotor side and forms a bottom portion of the cylinder 4. The lid member 4b is friction stir welded to the opening over the entire periphery thereof. The completion positions of the friction stir welding are each provided in a region surrounded by two tangents T1, T1 connecting outermost peripheries of the cylinders 4, 4 adjacent to each other and the outermost peripheries of the cylinders adjacent to each other.

## Description

### Technical Field

The present invention relates to a disc brake and a caliper body.

### Background Art

In the related art, in particular, in a caliper body of a monocoque-type disc brake in which a piston is provided to face a pair of action units, since there is no dimensional margin for inserting, between both action units, a tool for performing cutting processing on a cylinder bore into which the piston is inserted, the cylinder bore of one action unit is formed to penetrate in a disc axial direction, and the tool is inserted from the penetrated cylinder bore to perform the cutting processing on the cylinder bore.

In the penetrating cylinder bore, a bottom portion of the cylinder is formed by closing an opening on a side opposite to a disc rotor with a lid member after the cutting processing is ended, and the opening of the cylinder bore and the lid member are friction-stir joined over the entire periphery to reduce a processing cost and a component cost (for example, see PTL 1).

### Citation List

### Patent Literature

PTL 1: JP4828255B

### Summary of Invention

### Technical Problem

However, in PTL 1 described above, as shown in FIG. 8 in PTL 1, in a cylinder on a disc trailing edge, a bulging portion 54 bulging from an outer periphery of an opening of the cylinder bore on a side opposite to the disc rotor to the disc trailing edge is formed on the caliper body, and in the cylinder on a disc leading edge, a bulging portion 54 bulging from the outer periphery of the opening of the cylinder bore on the side opposite to the disc rotor to the disc leading edge is formed on the caliper body, and as shown in FIG. 3 in PTL 1, when the opening and the lid member are friction-stir welded, a joining tool is operated such that completion positions of the friction-stir welding become positions of the bulging portions, and residual shape portions 78 due to the friction-stir welding are formed in the bulging portions 54.

Specifically, during the friction-stir welding, a tip end of the joining tool is continuously moved along a joining boundary between the opening and the lid member, the friction-stir welding is performed in a loop shape over the entire periphery of the lid member, the joining tool is moved toward the bulging portion along a tangent direction of a joining boundary of the lid member when returning to a welding start position on an outer periphery of the lid member, and the joining tool is pulled out from the caliper body when a movement to a center position of the bulging portion is completed.

As described above, since the bulging portion is provided on the disc trailing edge with respect to the cylinder on the disc trailing edge and the bulging portion is provided on the disc leading edge with respect to the cylinder on the disc leading edge, the caliper body is increased in size toward the disc leading edge and the disc trailing edge, and there is a concern that the bulging portion comes into contact with a peripheral member or design properties are impaired.

Therefore, an object of the invention is to provide a disc brake and a caliper body that can be reduced in weight and cost by preventing the caliper body from increasing in size toward a disc leading edge and a disc trailing edge by bulging portions provided at completion positions of friction-stir joining.

### Solution to Problem

In order to achieve the above object, a disc brake of the invention is a disc brake in which a plurality of cylinders are provided in an action unit of a caliper body disposed on one side portion of a disc rotor, the cylinders each include a cylinder bore formed to penetrate therethrough in a disc axial direction, and a lid member closing an opening of the cylinder bore on a side opposite to the disc rotor to form a bottom portion of the cylinder, the lid member is friction-stir joined to the opening over the entire periphery thereof, and completion positions of the friction-stir joining are provided in a region surrounded by two tangents connecting outermost peripheries of the cylinders adjacent to each other and the outermost peripheries of the cylinders adjacent to each other.

A caliper body of a disc brake of the invention is a caliper body of a disc brake in which a plurality of cylinders are provided in an action unit disposed on one side portion of a disc rotor, the cylinders each include a cylinder bore formed to penetrate therethrough in a disc axial direction, and a lid member closing an opening of the cylinder bore on a side opposite to the disc rotor to form a bottom portion of the cylinder, the lid member is friction-stir joined to the opening over the entire periphery thereof, and completion positions of the friction-stir joining are provided in a region surrounded by two tangents connecting outermost peripheries of the cylinders adjacent to each other and the outermost peripheries of the cylinders adjacent to each other.

Further, it is preferable that the cylinder bore is formed in a cylindrical shape, and each of the completion positions is provided at an outer peripheral position of the corresponding opening, and it is suitable that the completion positions are provided on a disc radial direction line passing between the cylinders adjacent to each other.

In addition, it is preferable that the caliper body is a cast product in which a sprue is provided in a portion other than the action unit, and a planar portion is provided on an outer surface of the action unit near each of the completion positions.

Further, a communication hole in communication with the cylinder bore from an outside of the caliper body is formed in the caliper body, and the communication hole is not provided on a side of the disc rotor of the completion position.

### Advantageous Effects of Invention

According to the disc brake and the caliper body of the invention, since the completion positions of the friction-stir joining are provided in the range surrounded by the two tangents connecting the outermost peripheries of the adjacent cylinders and the outermost peripheries of the adjacent cylinders, a bulging portion in which a residual shape portion is formed by the friction-stir welding is formed on a center side of the action unit in the disc circumferential direction, and thus the caliper body is not increased in size toward a disc leading edge or a disc trailing edge, and a concern that the bulging portion comes into contact with peripheral members or the design properties are impaired is eliminated.

Further, by forming the cylinder bore in a cylindrical shape and providing the completion position at the outer peripheral position of the opening, the outermost periphery of the cylinder can be formed with a minimum diameter, and the caliper body is not increased in size toward the disc leading edge or the disc trailing edge. Further, during the friction-stir welding, it is only necessary to move a joining tool in a loop shape over the entire periphery of the lid member, and move the joining tool toward the outer peripheral position of the opening when the joining tool returns to a welding start position, and thus the joining tool does not need to be rotated, joining defects can be avoided and quality can be improved.

Further, since the completion positions of the friction-stir joining are provided on the disc radial direction line passing between the adjacent cylinders, the completion position can be effectively disposed by using a space between the adjacent cylinders.

Further, when the caliper body is a cast product in which the sprue is provided at a position other than the action unit disposed on one side portion of the disc rotor, the bulging portions are provided at positions away from the sprue, but the bulging portions are formed on the center side of the action unit in the disc circumferential direction and do not protrude toward the disc leading edge or the disc trailing edge, and thus it is possible to reliably cast the bulging portions without deteriorating a flow of molten metal. Further, by providing the planar portion on the outer surface of the action unit near each of the completion positions, the planar portion can be used as a pushpin seat when a casting body of the caliper body is removed from a mold by a pushpin or a processing reference surface when the casting body is processed.

In addition, since the communication hole in communication with the cylinder bore from the outside of the caliper body is formed in the caliper body, and the communication hole is not provided on the disc rotor side of each of the completion positions, the communication hole is not affected by the friction-stir welding, and a hydraulic fluid can be favorably circulated to the cylinder bore through the communication hole.

### Brief Description of Drawings

[FIG. 1] FIG. 1 is a rear view illustrating friction-stir joining of a caliper body showing an embodiment of the invention.
[FIG. 2] FIG. 2 is a rear view of the caliper body.
[FIG. 3] FIG. 3 is a plan view of the caliper body.
[FIG. 4] FIG. 4 is a perspective view of the caliper body.
[FIG. 5] FIG. 5 is a plan view of a disc brake using the caliper body in FIGS. 1 to 4.
[FIG. 6] FIG. 6 is a cross-sectional view taken along a line VI-VI in FIG. 5.
[FIG. 7] FIG. 7 is a cross-sectional view taken along a line VII-VII in FIG. 5.

### Description of Embodiments

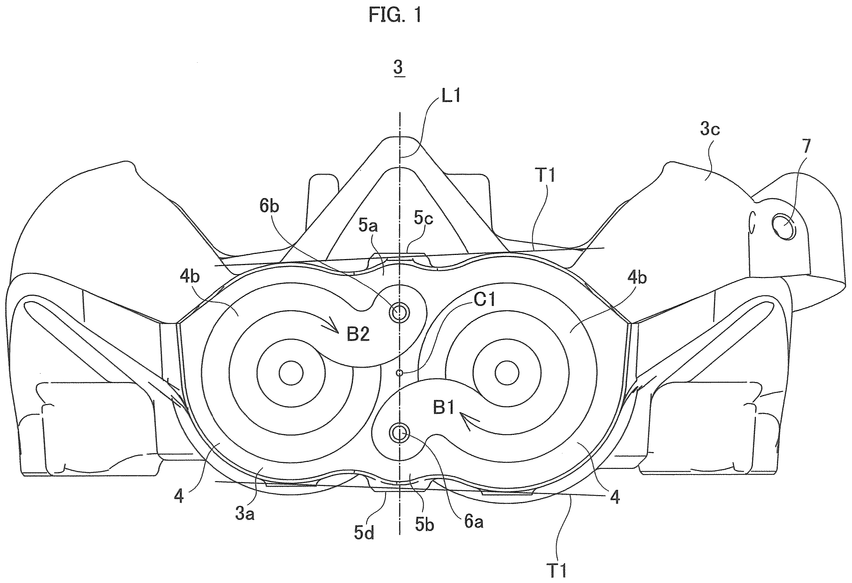

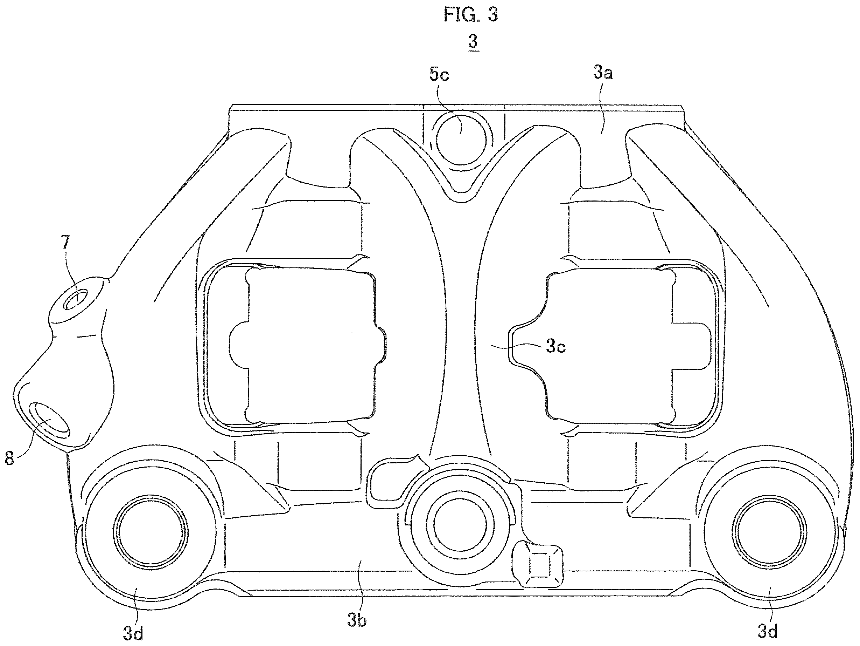

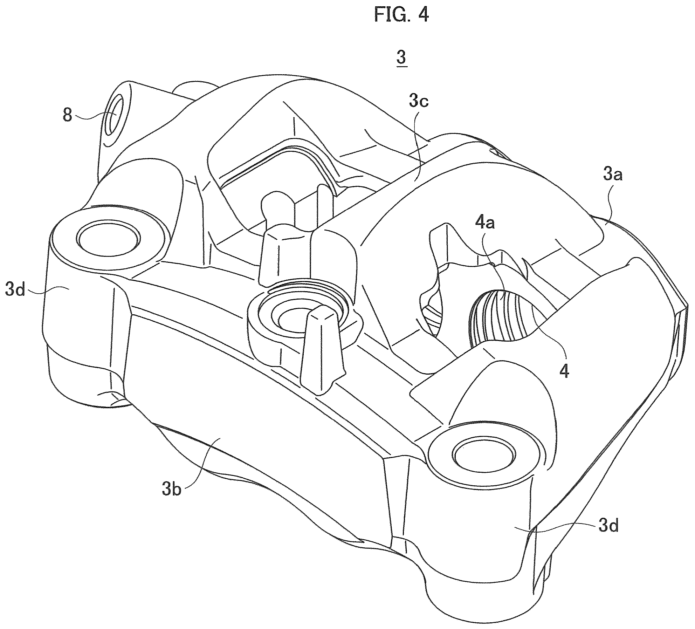

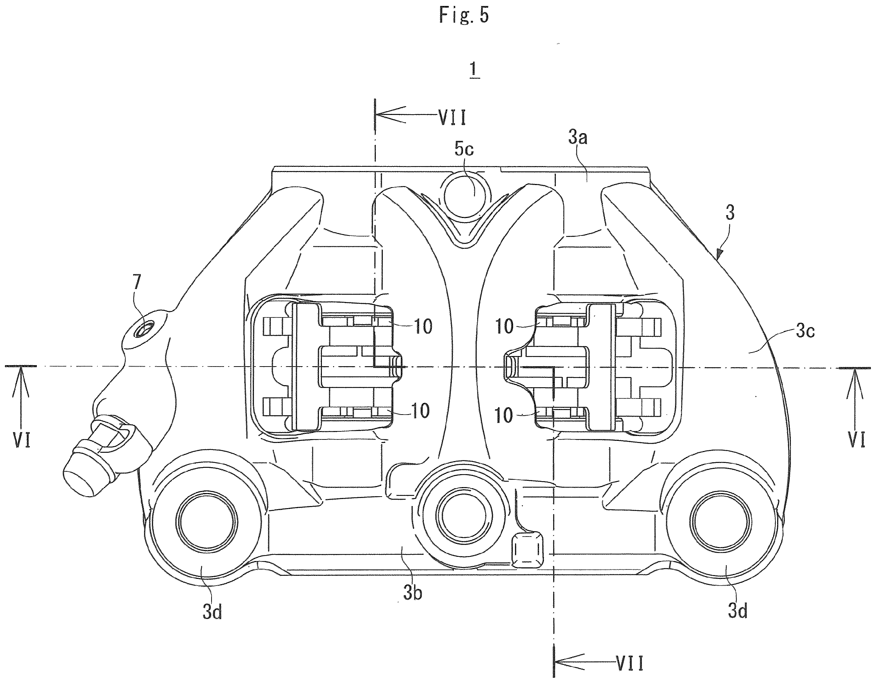

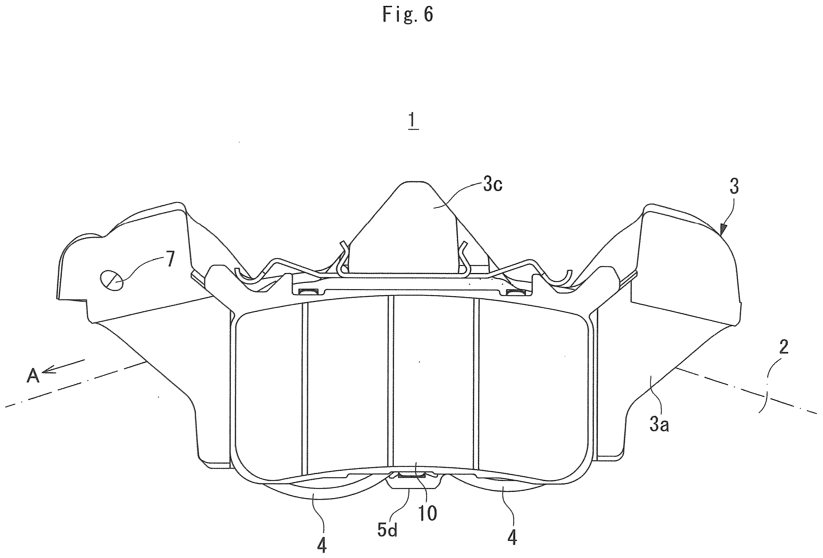

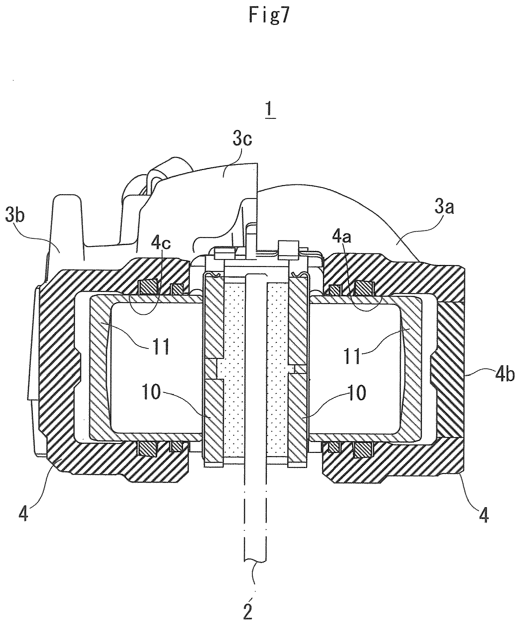

FIGS. 1 to 7 are views showing a caliper body showing an embodiment of the invention and a hydraulic pressure disc brake for a vehicle used for a steering vehicle such as an automobile or a motorcycle using the caliper body, in which an arrow A is a rotation direction of a disc rotor rotating integrally with wheels during vehicle forward movement when the disc brake is mounted on the vehicle, and a disc trailing edge and a disc leading edge to be described below are directions during the vehicle forward movement.

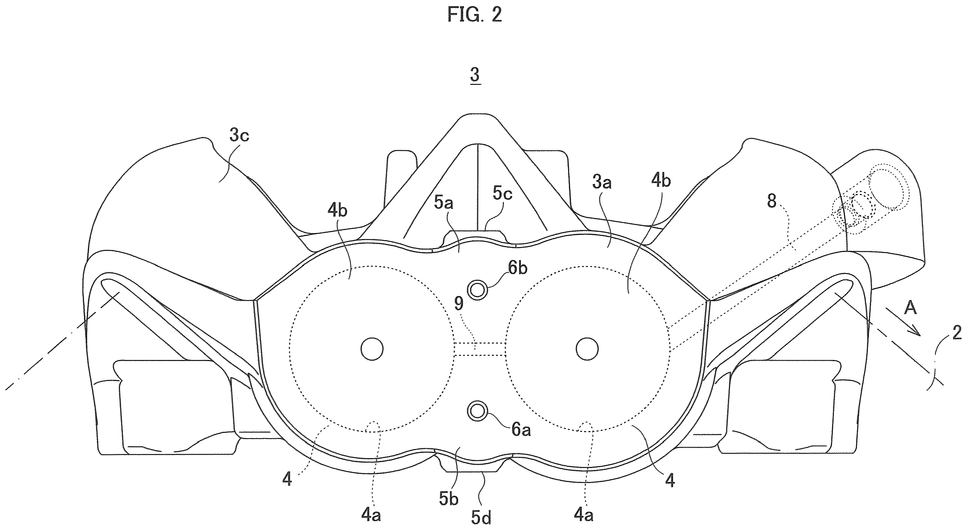

A disc brake 1 includes a disc rotor 2 (FIG. 2, FIG. 6, FIG. 7) that rotates integrally with wheels (not shown) in an arrow A direction, a caliper body 3 attached to a vehicle body on one side portion of the disc rotor 2, and a pair of friction pads 10, 10 that are disposed inside the caliper body 3 to face each other with the disc rotor 2 interposed therebetween.

The caliper body 3 is a monocoque-type caliper body in which one action unit 3a disposed on one side portion of the disc rotor 2, the other action unit 3b disposed on the other side portion of the disc rotor 2, and a bridge portion 3c connecting the action units 3a, 3b across an outer periphery of the disc rotor 2 are integrally formed.

Two cylinders 4 are provided in a disc circumferential direction so as to face each other in each of the one action unit 3a and the other action unit 3b, cup-shaped pistons 11 are inserted into cylinder bores 4a of the cylinders 4 in the one action unit 3a and cylinder bores 4c of the cylinders 4 in the other action unit 3b, respectively. The other action unit 3b is provided with boss portions 3d, 3d through which vehicle body attaching bolts (not shown) are inserted.

Each of the cylinders 4 formed in the one action unit 3a includes the cylindrical cylinder bore 4a formed to penetrate in a disc axial direction, and a lid member 4b that closes an opening of the cylinder bore 4a on a side opposite to the disc rotor to form a bottom portion of the cylinder 4.

Further, a first bulging portion 5a bulging outward in a disc radial direction and a second bulging portion 5b bulging inward in the disc radial direction are formed between the cylinders 4, 4 on the action unit 3a. The first bulging portion 5a is disposed at an outer peripheral position of the opening of the cylinder bore 4a on the disc leading edge, and the second bulging portion 5b is disposed at an outer peripheral position of the opening of the cylinder bore 4a on the disc trailing edge.

A planar portion 5c is formed near the first bulging portion 5a on an outer side portion of the action unit 3a in the disc radial direction (outer surface of the action unit), and a planar portion 5d is formed near the second bulging portion 5b on an inner side portion of the action unit 3a in the disc radial direction (outer surface of the action unit).

In the other action unit 3b, the two cylinders 4, 4 are formed at positions corresponding to the cylinders 4, 4 in the one action unit 3a, and the cylinder bores 4c, 4c each having a bottomed cylindrical shape into which the piston is inserted are formed in the cylinders.

The caliper body 3 is formed by casting, and a sprue (not shown) is provided in, for example, the other action unit 3b or the bridge portion 3c other than the one action unit 3a. A casting body of the caliper body 3 is casted such that the cylindrical cylinder bores 4a having both ends opened are provided in the one action unit 3a and the bottomed cylindrical cylinder bores 4c are provided in the other action unit 3b. Since the casting body does not have enough space to insert a cutting tool between the action units 3a, 3b, the cutting tool is inserted from a caliper-body-outer-sider opening (an opening on the side opposite to the disc rotor) of the cylinder bore 4a on an action unit 3a side, and the cylinder bores 4a on one action unit side and the cylinder bores 4c on the other action unit side facing each other are subjected to cutting processing. After completion of the cutting processing, the openings of the cylinder bores 4a on the action unit 3a side on the side opposite to the disc rotor are closed by the lid members 4b to form the bottom portions of the cylinders 4.

The openings of the cylinder bores 4a on the side opposite to the disc rotor and the lid members 4b are joined by friction-stir joining. As shown in FIG. 1, regarding the friction-stir welding between the opening of the cylinder bore 4a and the lid member 4b on the disc trailing edge, a tip end portion of the joining tool is continuously moved along a joining boundary between the opening of the cylinder bore 4a and the lid member 4b, the tip end portion is moved in a loop shape from a welding start position over the entire periphery of the lid member 4b as indicated by an arrow B1, after being moved to the joining start position, the tip end portion is moved toward the second bulging portion 5b, and the joining tool is pulled out from the caliper body 3 when a movement to a center position of the second bulging portion 5b is completed, thereby completing the friction-stir welding.

Regarding the friction-stir welding between the opening of the cylinder bore 4a and the lid member 4b on the disc leading edge, the tip end portion of the joining tool is continuously moved along a joining boundary between the opening of the cylinder bore 4a and the lid member 4b, the tip end portion is moved in a loop shape from a welding start position over the entire periphery of the lid member 4b as indicated by an arrow B2, after being moved to the joining start position, the tip end portion is moved toward the first bulging portion 5a, and the joining tool is pulled out from the caliper body 3 when a movement to a center position of the first bulging portion 5a is completed, thereby completing the friction-stir welding. The first bulging portion 5a and the second bulging portion 5b are respectively provided with residual shape portions 6a, 6b formed when the joining tool is pulled out.

As shown in FIG. 1, positions of the residual shape portions 6a, 6b formed on the caliper body 3, that is, completion positions of the friction-stir joining are formed between two tangents T1 and T1 connecting outermost peripheries of the adjacent cylinders 4, 4. Further, the positions (completion positions) of the residual shape portions 6a, 6b are formed on a disc radial direction line L1 passing through a center portion C1 between the adjacent cylinders 4, 4, the residual shape portion 6a (completion position) obtained by the friction-stir welding between the opening of the cylinder bore 4a and the lid member 4b on the disc trailing edge is formed on an inner side in the disc radial direction on the disc radial direction line L1, and the residual shape portion 6b (completion position) obtained by the friction-stir welding between the opening of the cylinder bore 4a and the lid member 4b on the disc leading edge is formed on an outer side in the disc radial direction on the disc radial direction line L1.

On the disc trailing edge of the caliper body 3, a communication hole 7 is bored from the outside of one action unit 3a toward the cylinder bore 4c on the disc trailing edge in the other action unit 3b, a communication hole 8 is bored from the outside of the other action unit 3b (the outside of the caliper body) toward the cylinder bore 4a on the disc trailing edge in the one action unit 3a, and these communication holes 7, 8 intersect at an intermediate portion. Further, the adjacent cylinder bores 4a, 4a in the one action unit 3a communicate with each other through a liquid through hole 9, and the adjacent cylinder bores 4c, 4c in the other action unit 3b also communicate with each other through a liquid through hole (not shown). Accordingly, a hydraulic fluid is supplied to the cylinder bores 4a, 4a, 4c, 4c through the communication holes 7, 8, the liquid through hole 9 on the action unit 3a side, and the liquid through hole on the action unit 3b side. Further, the communication hole 8 is formed at a position avoiding the completion position of the friction-stir joining, and is not provided on a disc rotor side of the completion position.

Since the present embodiment is formed as described above, the first bulging portion 5a and the second bulging portion 5b provided with the residual shape portions 6a, 6b (completion positions) obtained by the friction-stir welding are formed on a center side of the action unit 3a in the disc circumferential direction, the caliper body 3 is not increased in size toward the disc leading edge or the disc trailing edge. Accordingly, a concern that the bulging portions 5a, 5b come into contact with peripheral members or design properties are impaired is eliminated.

Further, during the friction-stir welding, it is only necessary to move the joining tool in the loop shape over the entire periphery of the lid member 4b, and move the joining tool toward the first bulging portion 5a or the second bulging portion 5b when the joining tool returns to the welding start position, and thus the joining tool does not need to be rotated, and welding defects can be avoided and quality can be improved.

Further, the completion positions during the friction-stir welding are provided on the disc radial direction line L1 passing between the adjacent cylinders 4, 4, and thus the completion positions can be effectively disposed by using a space between the adjacent cylinders 4, 4.

In addition, during casting of the caliper body 3, the first bulging portion 5a and the second bulging portion 5b are provided at positions away from the sprue, but the first bulging portion 5a and the second bulging portion 5b are formed on the center side of the action unit 3a in the disc circumferential direction and do not protrude toward the disc leading edge or the disc trailing edge, and thus it is possible to reliably cast the first bulging portion 5a and the second bulging portion 5b without deteriorating a flow of a molten metal.

Further, since the planar portion 5c is provided on the outer side portion of the action unit 3a in the disc radial direction (outer surface of the action unit) near the first bulging portion 5a, and the planar portion 5d is provided on the inner side portion of the action unit 3a in the disc radial direction (outer surface of the action unit) near the second bulging portion 5b, the planar portions 5c, 5d can be used as pushpin seats when the casting body of the caliper body 3 is removed from a mold with a pushpin, or a processing reference surface when the casting body is processed.

Further, since the communication hole 8 formed in the caliper body 3 is formed at the position avoiding the completion position of the friction-stir joining and is not provided on the disc rotor side at the completion position, the concern that the communication hole 8 is affected by the friction-stir joining is eliminated.

In the above-described embodiment, the completion position of the friction-stir joining on the disc leading edge is provided on the outer side in the disc radial direction, and the completion position of the friction-stir joining on the disc trailing edge is provided on the inner side in the disc radial direction, but the invention is not limited thereto, the completion positions of the friction-stir joining may be reversed. Further, the invention is not limited to the above-described embodiment, and can also be applied to a configuration in which three or more cylinders are provided in the action unit. In the case where three cylinders are provided, for example, completion positions of the friction-stir welding of a cylinder on the disc trailing edge and a center cylinder may be provided on the inner side and the outer side in the disc radial direction between the cylinder on the disc trailing edge and the center cylinder, and the completion position of the friction-stir welding of a cylinder on the disc leading edge may be provided on the inner side or the outer side in the disc radial direction between the center cylinder and the cylinder on the disc leading edge. In addition, even when four or more cylinders are provided in the action unit, the completion positions of the friction-stir welding may be appropriately provided using the space between the adjacent cylinders as in the case where the two cylinders or the three cylinders are provided as described above.

Further, the cylinders are not limited to having the same diameter, and the cylinders may have different diameters. Further, the caliper body is not limited to the piston-facing-type caliper body as in the above-described embodiment, and can also be applied to a pin-slide-type caliper body in which an action unit including a piston disposed on one side portion of a disc rotor and a reaction unit including a reaction force claw disposed on the other side portion of the disc rotor are connected by a bridge portion. The caliper body is not limited to the monocoque type, and may be a split-type caliper body. Further, the caliper body is not limited to a caliper body formed by casting.

The disc brake according to the invention is not limited to a disc brake for a vehicle, and can be applied to various applications such as braking of rotating portions of various mechanical devices.

### Reference Signs List

1: disc brake
2: disc rotor
3: caliper body
3a, 3b: action unit
3c: bridge portion
3d: boss portion
4: cylinder
4a, 4c: cylinder bore
4b: lid member
5a: first bulging portion
5b: second bulging portion
5c, 5d: planar portion
6a, 6b: residual shape portion
7, 8: communication hole
9: liquid through hole
10: friction pad
11: piston

## Claims

1. A disc brake, wherein
a plurality of cylinders are provided in an action unit of a caliper body disposed on one side portion of a disc rotor,
the cylinders each include a cylinder bore formed to penetrate therethrough in a disc axial direction, and a lid member closing an opening of the cylinder bore on a side opposite to the disc rotor to form a bottom portion of the cylinder,
the lid member is friction-stir joined to the opening over an entire periphery thereof, and
completion positions of the friction-stir joining are provided in a region surrounded by two tangents connecting outermost peripheries of the cylinders adjacent to each other and the outermost peripheries of the cylinders adjacent to each other.

2. The disc brake according to claim 1, wherein
the cylinder bore is formed in a cylindrical shape, and
the completion position is provided at an outer peripheral position of the opening.

3. The disc brake according to claim 1 or 2, wherein
the completion positions are provided on a disc radial direction line passing between the cylinders adjacent to each other.

4. The disc brake according to claim 3, wherein
the caliper body is a cast product in which a sprue is provided in a portion other than the action unit, and
a planar portion is provided on an outer surface of the action unit near the completion position.

5. The disc brake according to claim 1 or 2, wherein
a communication hole in communication with the cylinder bore from an outside of the caliper body is formed in the caliper body, and
the communication hole is not provided on a side of the disc rotor of the completion position.

6. A caliper body of a disc brake, wherein
a plurality of cylinders are provided in an action unit disposed on one side portion of a disc rotor,
the cylinders each include a cylinder bore formed to penetrate therethrough in a disc axial direction, and a lid member closing an opening of the cylinder bore on a side opposite to the disc rotor to form a bottom portion of the cylinder,
the lid member is friction-stir joined to the opening over an entire periphery thereof, and
completion positions of the friction-stir joining are provided in a region surrounded by two tangents connecting outermost peripheries of the cylinders adjacent to each other and the outermost peripheries of the cylinders adjacent to each other.

7. The caliper body of a disc brake according to claim 6, wherein
the cylinder bore is formed in a cylindrical shape, and
the completion position is provided at an outer peripheral position of the opening.

8. The caliper body of a disc brake according to claim 6 or 7, wherein
the completion positions are provided on a disc radial direction line passing between the cylinders adjacent to each other.

9. The caliper body of a disc brake according to claim 8, wherein
the caliper body is a cast product in which a sprue is provided in a portion other than the action unit, and
a planar portion is provided on an outer surface of the action unit near the completion position.

10. The caliper body of a disc brake according to claim 6 or 7, wherein
a communication hole in communication with the cylinder bore from an outside of the caliper body is formed, and
the communication hole is not provided on a side of the disc rotor of the completion position.
